# FASCICULE DE BREVET EUROPEEN

(11) **EP 1 039 726 B1**
(45) Date de publication et mention de la délivrance du brevet: **13.08.2008**
(21) Numéro de dépôt: 00400138.4
(22) Date de dépôt: 20.01.2000
(51) Int. Cl.: H04M 1/02, H04M 1/60

(54) **Téléphone portable avec volet articulé par rapport au boîtier et procédé correspondant**
Tragbares Telefon mit einer schwenkbaren Klappe und entsprechendes Verfahren
Portable telephone with a hinged cover and corresponding method

(30) Priorité: 22.03.1999 FR 9903516
(43) Date de publication de la demande: 27.09.2000
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Hiebel, Claude, 93800 Epinay (FR)
(74) Mandataire: Feray, Valérie

(56) Documents cités:
- EP-A- 0 607 038
- EP-A- 0 661 824
- EP-A- 0 796 026
- WO-A-91/07836
- WO-A-93/07680
- DE-C- 19 708 120
- FR-A- 2 768 011

## Description

L'invention se rapporte à un appareil radio téléphonique portable comprenant un boîtier et un volet mobile en rotation par rapport au boîtier.

Ce volet peut prendre différentes positions angulaires par rapport au boîtier, entre deux positions extrêmes :
- une position rabattue, dans laquelle le volet est rabattu contre le boîtier, de manière à recouvrir par exemple les touches alphanumériques ; et
- une position déployée, dans laquelle le volet forme sensiblement un angle de 180° par rapport au boîtier.

En position rabattue, le volet assure généralement la protection des touches, tandis qu'en position déployée, il permet l'accès à celles-ci.

Le téléphone portable comprend également des moyens de détection de la position du volet ainsi qu'un commutateur, relié aux moyens de détection, pour commuter vers une fonction "décroché", permettant un appel téléphonique, lorsque le volet est en position déployée ou vers une fonction "raccroché", interrompant l'appel téléphonique en cours, lorsque le volet est en position rabattue.

On entend par appareil radio téléphonique portable notamment tout type de téléphone sans fil, tel que par exemple les téléphones qui sont reliés par voie radio à une station de base connectée à un réseau commuté public ou les téléphones dits cellulaires fonctionnant dans un réseau de radiocommunication notamment du type GSM.

De nombreux téléphones portables comportent désormais une fonction d'appel téléphonique dite en mode mains-libres, permettant d'effectuer ou de recevoir un appel sans avoir à tenir le téléphone près de l'oreille ou de la bouche.

Afin que l'interlocuteur puisse entendre convenablement la conversation, le niveau sonore du téléphone est amplifié.

Il est donc indispensable que le mode mains-libres ne soit activé que lorsque le téléphone est à distance de l'oreille ou de la bouche.

Il existe des dispositifs fixes, notamment pour véhicules, permettant la commutation automatique de la fonction mains-libres dès que le téléphone est positionné sur le dispositif fixe.

Ce mode de réalisation présente cependant l'inconvénient de nécessiter la présence d'un dispositif supplémentaire.

En l'absence de ces dispositifs fixes, l'activation ou la désactivation de la fonction mains-libres est permise par la sélection d'une touche ou d'un menu spécifique.

Ce mode de réalisation est cependant complexe et l'activation n'est pas automatique.

D'autres téléphones portables disposent d'un détecteur infrarouge apte à détecter la distance séparant le téléphone de la bouche ou de l'oreille. Des distances seuils permettent l'activation ou la désactivation de la fonction mains-libres.

De tels téléphones ont l'inconvénient de nécessiter des composants supplémentaires, d'où l'augmentation de la taille du boîtier et du coût de l'appareil.

Le brevet DE 197 08 120 et la demande WO 91/07836 décrivent un terminal pouvant fonctionner en mode mains-libres et comprenant un volet mobile entre une position déployée et une position rabattue. Le terminal décrit dans ces documents ne comprend toutefois pas de commutateur muni de moyens pour commuter vers la fonction mains-libres lorsque le volet est dans une position intermédiaire.

L'invention a donc pour but de résoudre les inconvénients précités.

A cet effet, elle propose un appareil radio téléphonique portable du type précité, caractérisé en ce que le commutateur comporte en outre des moyens pour commuter vers une fonction d'appel téléphonique dite en « mode mains-libres », lorsque le volet est dans une position intermédiaire déterminée.

Cette position intermédiaire du volet n'étant pas confortable pour l'utilisateur en cours de communication, elle lui impose de s'écarter automatiquement de l'appareil radio téléphonique lorsque la fonction "mains-libres" est activée.

Selon un mode de réalisation particulier, en position intermédiaire, le volet forme sensiblement un angle compris entre 60° et 120° par rapport au boîtier.

Les moyens de détection de la position du volet par rapport au boîtier peuvent être mécaniques et / ou électromagnétiques.

L'invention concerne également un procédé de commande d'un circuit dit « mains-libres » d'un appareil radio téléphonique portable ayant un boîtier et un volet mobile en rotation autour du boîtier entre une position rabattue et une position déployée, caractérisé par l'activation du circuit « mains-libres » lorsque le volet est dans une position intermédiaire déterminée ; et par la désactivation du circuit « mains-libres » lorsque le volet est dans la position rabattue ou la position déployée.

L'invention sera mieux comprise à la lumière de la description détaillée qui suit en référence aux dessins annexés.

La figure 1 représente une vue latérale schématique d'un premier mode de réalisation d'un appareil radio téléphonique portable de l'invention, le volet étant dans sa position rabattue.

Les figures 2 et 3 sont des vues latérales schématiques de l'appareil radio téléphonique de la figure 1, le volet étant respectivement dans sa position intermédiaire et dans sa position déployée.

La figure 4 représente une vue partielle en perspective, en coupe, d'un deuxième mode de réalisation de l'appareil radio téléphonique de l'invention, montrant une variante des moyens de détection, le volet étant dans sa position intermédiaire.

La figure 5 représente une vue latérale schématique d'un troisième mode de réalisation de l'appareil radio téléphonique de l'invention, montrant les positions rabattue, intermédiaire et déployée du volet.

Les figures 6 et 7 montrent des agrandissements, en coupe transversale, de l'articulation d'un quatrième mode de réalisation de l'appareil radio téléphonique de l'invention, le volet étant respectivement dans sa position rabattue et dans sa position intermédiaire.

La figure 8 est un schéma fonctionnel de l'appareil radio téléphonique de l'invention.

L'appareil radio téléphonique portable représenté sur les figures est un téléphone portable. L'invention s'étend en outre à tout appareil radio téléphonique à usage mains-libres, c'est-à-dire comportant la fonction d'appel téléphonique dite en « mode mains-libres ».

Le téléphone comprend un boîtier 1, de forme généralement parallélépipédique, comportant deux grandes faces sensiblement parallèles : une face avant 2a, et une face arrière 2b. Les faces avant et arrière 2a, 2b sont reliées entre elles par deux faces latérales opposées 3 et deux faces supérieure 4a et inférieure 4b.

La face avant 2a comporte un écran 5, un clavier alphanumérique 6, ainsi qu'un microphone 7, situé vers la face inférieure 4b, et un haut-parleur 8, situé vers la face supérieure 4a.

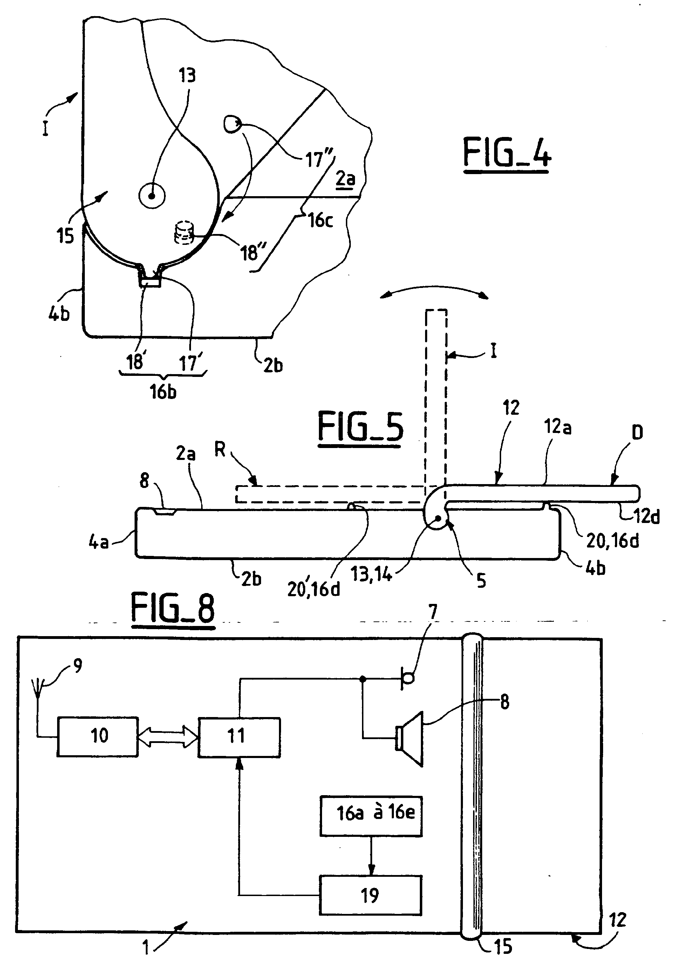

Le téléphone comprend également une antenne 9, située à l'intérieur ou à l'extérieur du boîtier 1, ainsi qu'un circuit radio 10, situé à l'intérieur du boîtier 1 (voir figure 8).

Le circuit radio 10 est relié à un circuit de commande 11, généralement un microprocesseur.

Lors de la réception de signaux radio, l'antenne 9 les convertit en signaux électriques aptes à être exploités par le circuit radio 10. Les données correspondant à ces signaux sont ensuite transmises au circuit de commande 11 qui, après traitement, les transmettra, le cas échéant, au microphone 7 et au haut-parleur 8.

Le circuit de commande 11 est apte à être configuré suivant une fonction « décroché », une fonction « raccroché » ou une fonction « mains-libres ».

Dans la fonction « décroché », l'utilisateur doit approcher le haut-parleur 8 de son oreille et le microphone 7 de sa bouche afin de converser avec son correspondant.

Dans la fonction « raccroché », l'utilisateur ne peut pas converser avec un correspondant.

Dans la fonction « mains-libres », l'utilisateur peut converser avec son correspondant, sans avoir à approcher le téléphone de sa tête.

Les moyens permettant l'utilisation en mains-libres du téléphone comprennent :
- au moins un microphone, capable de relever le signal sonore de la voix de l'utilisateur ;
- au moins un haut-parleur pour restituer de manière amplifiée le signal sonore émis par le correspondant.

Le téléphone comprend également un volet 12, de forme générale rectangulaire, mobile en rotation par rapport au boîtier 1.

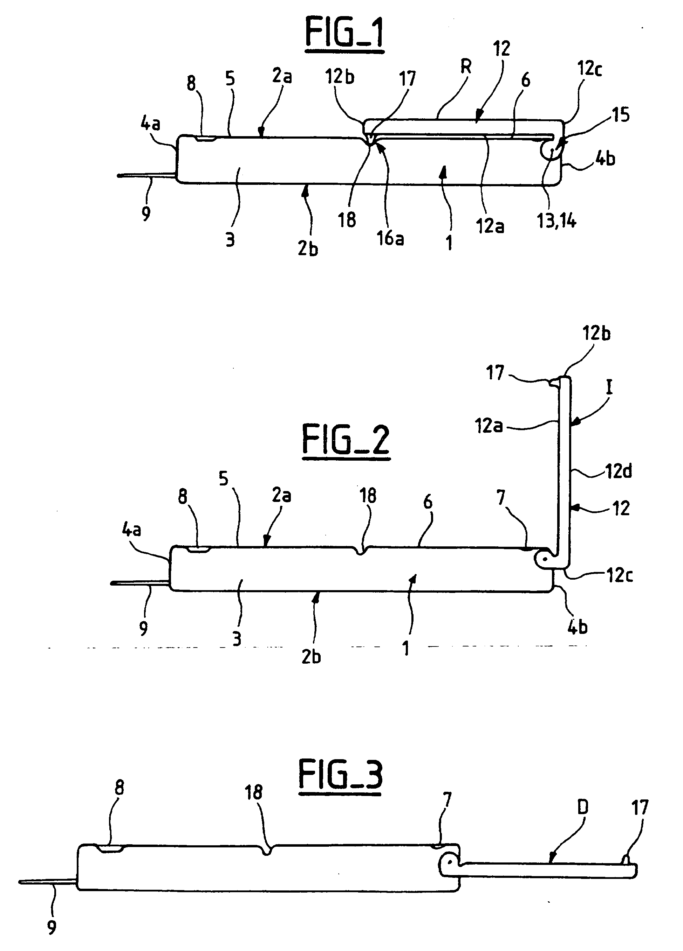

Plus précisément, le volet 12 est monté de manière articulée autour d'un axe 13 transversal à la face avant 2a et parallèlement aux faces inférieure 4b et supérieure 4a. Le volet 12 est articulé par l'intermédiaire d'une articulation 15 à deux charnières solidaires du volet 12 (figures 1 à 3 et 5).

Dans la réalisation de la figure 4, l'articulation 15 comporte une unique charnière.

Il est entendu que dans une autre réalisation, l'articulation 15 pourrait comporter un nombre de charnières différent.

Dans les modes de réalisation représentés, le boîtier 1 comporte sur ses faces latérales 3 les points d'ancrage 14 de l'axe 13.

Sur les figures 1 à 4, les points d'ancrage 14 sont disposés vers la face inférieure 4b, tandis que sur la figure 5, ils sont situés sensiblement à mi-distance entre la face inférieure 4b et la face supérieure 4a.

L'articulation 15 du volet 12 est une articulation classique qui ne sera pas décrite ici en détail.

Elle est réalisée de sorte que le volet 12 puisse être mobile entre deux positions extrêmes :
- une position rabattue R, dans laquelle le volet 12 est rabattu contre une partie au moins de la face avant 2a du boîtier 1, et
- une position déployée D, dans laquelle le volet 12 forme sensiblement un angle de 180° par rapport à la face avant 2a du boîtier 1.

Le volet 12 est également apte à être déplacé vers une position intermédiaire I déterminée, située entre la position rabattue R et la position déployée D.

Dans une réalisation particulière, en position intermédiaire I, le volet 12 forme sensiblement un angle de 90° par rapport à la face avant 2a du boîtier 1.

Cet angle peut varier suivant les réalisations entre environ 60° et 120°.

Dans un mode de réalisation non représenté, on peut envisager que le volet 12, et non le boîtier 1, comporte le clavier alphanumérique 6 et / ou le microphone 7.

Le circuit de commande 11 est programmé de sorte que :
- la fonction « décroché » soit exécutée dès que la position déployée D est détectée ;
- la fonction « raccroché » soit exécutée dès que la position rabattue R est détectée ;
- la fonction « mains-libres » soit exécutée dès que la position intermédiaire I est détectée.

Selon la fonction sélectionnée, le circuit de commande 11 commandera le niveau sonore du microphone 7 et du haut-parleur 8.

Le téléphone comporte des moyens de détection 16a, 16b, 16c, 16d et 16e permettant de détecter la position du volet 12 par rapport au boîtier 1.

Ces moyens de détection 16a à 16e sont situés sur ou à l'intérieur du volet 12 et / ou sur ou à l'intérieur du boîtier 1.

Dans le mode de réalisation des figures 1 à 3, le volet 12 comporte un ergot 17 sur sa face intérieure 12a, qui est destinée à venir en regard de la face avant 2a du boîtier 1 en position rabattue R. Plus précisément, l'ergot 17 est disposé vers la première partie extrême libre 12b du volet 12, qui est opposée à l'articulation 15.

L'ergot 17 est fixé de manière rigide et inamovible à la face intérieure 12a.

Lorsque le volet 12 est dans la position devant être détectée, en l'occurrence ici la position rabattue R, l'ergot 17 vient s'emboîter dans une encoche formant interrupteur 18.

Cette encoche 18 présente une forme sensiblement complémentaire à celle de l'ergot 17. Elle est ménagée dans la face avant 2a du boîtier 1.

L'encoche 18 est reliée, électriquement ou mécaniquement, à un commutateur 19 apte à commander le circuit de commande 11 de manière qu'il commute vers la fonction correspondant à la position détectée.

L'ergot 17 et l'encoche 18 forment ainsi des premiers moyens de détection 16a.

Ainsi, dans le cas présent, dès que la position rabattue R est détectée, la fonction « raccroché » est activée.

Des deuxièmes moyens de détection 16b, décrits ci-après, sont présents au niveau de l'articulation 15 pour détecter la position intermédiaire I.

En référence à la figure 4, le volet 12 comporte deux ergots 17', 17" en saillie sur l'articulation 15. Les ergots 17' et 17" sont similaires à l'ergot 17. Pour éviter une gêne au niveau des ergots 17' et 17" lors de l'articulation du volet 12, on prévoit une rainure ou des moyens équivalents (non représentés) dans le boîtier 1, les ergots se déplaçant en regard de cette rainure lors de la rotation du volet 12.

Les ergots 17' et 17" sont distants l'un de l'autre d'un écart angulaire par rapport à l'axe 13, d'environ 90°, cet écart étant fonction de l'angle du volet 12 par rapport à la face avant 2a du boîtier 1 en position intermédiaire I. Par ailleurs, les ergots 17', 17" sont placés dans deux plans parallèles entre eux et perpendiculaires au plan principal du volet 12.

Deux encoches formant interrupteurs 18' et 18", reliées au commutateur 19, sont ménagées à l'intérieur du boîtier 1 dans la partie apte à recevoir l'articulation 15, de sorte que en fonction de la position du volet, l'ergot 17', respectivement 17", vienne en contact avec l'interrupteur 18', respectivement 18".

L'ergot 17' et l'interrupteur 18' forment les moyens de détection 16b tandis que l'ergot 17" et l'interrupteur 18" forment les moyens de détection 16c.

Les positions des ergots 17' et 17" sont telles que :
- lorsque l'ergot 17' vient en contact avec l'interrupteur 18', le volet 12 se trouve dans la position intermédiaire I, et la fonction « mains-libres » est activée ;
- lorsque l'ergot 17" vient en contact avec l'interrupteur 18", le volet 12 se trouve dans la position rabattue R, et la fonction « raccroché » est activée.

Dans le mode de réalisation des figures 1 à 3, les positions intermédiaire I et rabattue R étant détectables, on ne prévoit pas de moyen de détection particulier pour la position déployée D. En effet, dès lors que le volet 12 ne se trouve ni dans la position intermédiaire I, ni dans la position rabattue R, on commande le circuit de commande 11 en mode "décroché".

Il est entendu que dans un autre mode de réalisation, on peut envisager des moyens de détection particuliers, par exemple similaires aux moyens de détection 16b ou 16c, pour la position déployée D.

Dans le mode de réalisation de la figure 5, les moyens de détection 16d comprennent au moins un poussoir 20 disposé en saillie sur la face avant 2a du boîtier 1.

Plus précisément, deux poussoirs 20, 20' sont disposés sur la face avant 2a de part et d'autre de l'articulation 15, de sorte que lorsque le volet 12 est soit dans la position rabattue R soit dans la position déployée D, une partie de la face intérieure 12a, respectivement extérieure 12d, du volet 12 vienne en contact avec le poussoir 20, 20'.

Ainsi, l'un des poussoirs 20 est plus proche de la face inférieure 4b du boîtier 1, tandis que l'autre poussoir 20' est plus proche de la face supérieure 4a.

Les poussoirs 20, 20' sont reliés, électriquement ou mécaniquement, au commutateur 19 de sorte que lorsqu'ils sont enfoncés, le commutateur 19 commute vers la fonction correspondant à la position détectée.

De même que pour le mode de réalisation des figures 1 à 4, lorsque les positions déployée D et rabattue R ne sont pas détectées, c'est-à-dire qu'aucun poussoir 20, 20' n'est enfoncé, la fonction « mains libres » est automatiquement activée.

On peut également prévoir des moyens de détection particuliers pour la position intermédiaire I.

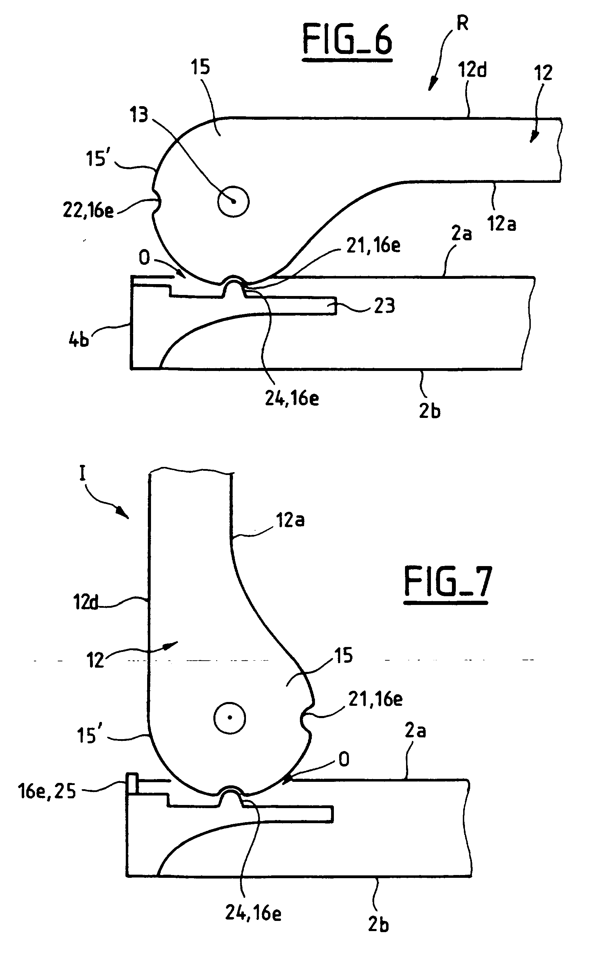

Dans le mode de réalisation des figures 6 et 7, on prévoit des moyens de détection 16e au niveau de l'articulation 15 du volet 12 par rapport au boîtier 1.

Ainsi, chaque charnière comporte sur son bord extérieur 15' deux encoches 21, 22.

Ces encoches 21, 22 ont entre elles un écart angulaire d'environ 90°. Il est entendu que cet écart est fonction de l'angle du volet 12 par rapport à la face avant 2a du boîtier1 en position intermédiaire I.

Deux bras 23, de préférence flexibles, exerçant une fonction de ressort, sont fixés au boîtier 1 à partir de sa face inférieure 4b et dirigés vers sa face supérieure 4a.

Les deux bras 23 s'étendent sensiblement parallèlement l'un par rapport à l'autre dans un même plan, parallèle à la face avant 2a du boîtier 1.

Chaque bras 23 est disposé de sorte qu'il vienne en regard de l'articulation 15.

Chaque bras 23 comporte une butée 24 qui saille en direction et perpendiculairement à l'axe d'articulation 13.

La face avant 2a comporte une ouverture O en regard de la portion du bras 23 comportant la butée 24.

Les butées 24 présentent une forme apte à recevoir les encoches 21 et 22 des charnières 15a, 15b.

Elles sont en outre reliées, électriquement ou mécaniquement, au commutateur 19.

Les encoches 21, respectivement 22, ainsi que les butées 24 sont disposées de sorte que lorsque le volet 12 est en position rabattue R, respectivement en position intermédiaire I, les encoches 21, respectivement 22, coopèrent avec la butée correspondante 24.

De cette manière, lorsque les encoches 21 des charnières sont en prise avec les butées 24 des bras 23, la position rabattue R est détectée et la fonction associée, à savoir la fonction « raccroché », est activée.

De même, lorsque les encoches 22 des charnières sont en prise avec les butées 24 des bras 23, la position intermédiaire I est détectée et la fonction associée, à savoir la fonction « mains-libres », est activée.

Dans la réalisation de la figure 6, aucun moyen de détection n'est prévu pour la position déployée D. Par conséquent, lorsque ni la position rabattue R, ni la position intermédiaire I n'est détectée, la fonction « décroché » est activée.

Dans la réalisation de la figure 7, un bouton poussoir 25 est disposé sur la face avant 2a du boîtier 1, à proximité de sa face inférieure 4b.

Ce bouton poussoir 25 saille en direction et perpendiculairement à l'axe d'articulation 13, et est relié au commutateur 19.

Il est disposé de sorte qu'il soit enfoncé par la face extérieure 12d du volet 12 lorsque celui-ci est dans sa position déployée D, la position enfoncée du bouton poussoir 25 déclenchant la fonction "décroché".

Dans un autre mode de réalisation, on peut prévoir un unique bras 23 comportant deux butées 24 aptes à coopérer avec les encoches 21 et 22 des deux charnières. On peut également envisager, dans le cas d'une articulation 15 à une seule charnière, un unique bras 23 avec une butée 24 centrale apte à coopérer avec les encoches de la charnière.

Par ailleurs, dans une autre réalisation, on pourrait envisager de combiner les moyens de détections 16a à 16e des modes de réalisation qui viennent d'être décrits.

Dans les présents modes de réalisation, les moyens de détection 16a à 16e sont mécaniques.

On peut néanmoins prévoir qu'ils soient électromécaniques ou électromagnétiques.

Ainsi, dans un exemple de réalisation, les moyens de détection pourraient comprendre un aimant disposé dans le volet 12 et un élément électrique, par exemple un capteur à effet Hall, sensible aux champs magnétiques, disposé dans le boîtierl et relié au commutateur 19.

On peut également envisager la situation inverse où l'aimant est disposé dans le boîtier 1 et l'élément électrique dans le volet 12.

D'autres modes de réalisation des moyens de détection sont également envisageables.

## Revendications

1. Appareil radio téléphonique portable comprenant :
- un boîtier (1) ;
- un volet (12) mobile en rotation par rapport au boîtier, le volet pouvant prendre différentes positions angulaires par rapport au boîtier, entre deux positions extrêmes :
• une position rabattue (R), dans laquelle le volet est rabattu contre le boîtier, et
• une position déployée (D), dans laquelle le volet forme sensiblement un angle de 180° par rapport au boîtier ;
- des moyens de détection (16a à 16e) de la position du volet ; et
- un commutateur (19), relié aux moyens de détection, pour commuter vers une fonction « décroché », permettant un appel téléphonique, lorsque le volet est en position déployée ou vers une fonction « raccroché », interrompant l'appel téléphonique en cours, lorsque le volet est en position rabattue ;
**caractérisé en ce que** le commutateur comporte en outre des moyens pour commuter vers une fonction d'appel téléphonique dite « mains-libres », lorsque le volet est dans une position intermédiaire déterminée (I).

2. Appareil radio téléphonique portable selon la revendication 1, **caractérisé en ce que**, en position intermédiaire (I), le volet (12) forme sensiblement un angle compris entre 60° et 120° par rapport au boîtier (1).

3. Appareil radio téléphonique portable selon la revendication 1 ou 2, **caractérisé en ce que** les moyens de détection (16a à 16e) sont disposés sur le boîtier et / ou sur le volet.

4. Appareil radio téléphonique portable selon la revendication 3, **caractérisé en ce que** les moyens de détection (16a) sont disposés sur la partie extrême libre du volet, apte à venir en regard du boîtier.

5. Appareil radio téléphonique portable selon la revendication 3 ou 4, **caractérisé en ce que** les moyens de détection (16b, 16c, 16e) sont disposés au niveau de l'articulation (15) du volet par rapport au boîtier.

6. Appareil radio téléphonique portable selon l'une des revendications 3 à 5, **caractérisé en ce que** les moyens de détection sont mécaniques.

7. Appareil radio téléphonique portable selon la revendication 6, **caractérisé en ce que** les moyens de détection (16a, 16b, 16c) comprennent un ergot (17, 17', 17") positionné sur le volet et une encoche formant interrupteur (18, 18', 18"), de forme complémentaire à l'ergot, ménagée dans le boîtier de sorte que lorsque le volet est dans la position devant être détectée, l'ergot vienne s'emboîter dans l'encoche, celle-ci étant reliée au commutateur (19) de manière à commuter vers la fonction correspondante.

8. Appareil radio téléphonique portable selon la revendication 6, **caractérisé en ce que** les moyens de détection (16d) comprennent au moins un poussoir (20, 20') disposé sur le boîtier de sorte que lorsque le volet est dans la position devant être détectée, une partie (12a, 12d) du volet vienne en contact avec le poussoir, celui-ci étant relié au commutateur (19) de manière à commuter vers la fonction correspondante.

9. Appareil radio téléphonique portable selon l'une des revendications 3 à 8, **caractérisé en ce que** les moyens de détection sont électromagnétiques.

10. Appareil radio téléphonique portable selon la revendication 9, **caractérisé en ce que** les moyens de détection comprennent un élément électrique sensible aux champs magnétiques, disposé dans le boîtier, respectivement le volet, et un aimant disposé dans le volet, respectivement le boîtier.

11. Procédé de commande d'un circuit dit « mains-libres » d'un appareil radio téléphonique portable ayant un boîtier (1) et un volet (12) mobile en rotation autour du boîtier entre une position rabattue (R) et une position déployée (D), **caractérisé par** :
- l'activation du circuit « mains-libres » lorsque le volet est dans une position intermédiaire déterminée (I) ; et
- la désactivation du circuit « mains-libres » lorsque le volet est dans la position rabattue (R) ou la position déployée (D).

## Claims

1. A portable radio telephone apparatus comprising:
- a case (1);
- a flap (12) mobile in rotation relative to the case, the flap being able to assume different angular positions relative to the box, between two extreme positions:
• a folded down position (R), in which the flap is folded down against the case, and
• a deployed position (D), in which the flap substantially forms a 180° angle relative to the case;
- means (16a to 16e) for detecting the position of the flap; and
- a switch (19), connected to the detection means, to switch between a "picked up" function, allowing a telephone call, when the flap is in the deployed position, or to a "hung up" function, interrupting the telephone call in progress, when the flap is in the folded down position;
**characterized in that** the switch also comprises means for switching toward a "hands-free" telephone call function, when the flap is in a determined intermediate position (I).

2. The portable radio telephone apparatus according to claim 1, **characterized in that**, in the intermediate position (I), the flap (12) substantially forms an angle between 60° and 120° relative to the case (1).

3. The portable radio telephone apparatus according to claim 1 or 2, **characterized in that** the detection means (16a to 16e) are arranged on the case and/or on the flap.

4. The portable radio telephone apparatus according to claim 3, **characterized in that** the detection means (16a) are arranged on the free end part of the flap, able to come opposite the case.

5. The portable radio telephone apparatus according to claim 3 or 4, **characterized in that** the detection means (16b, 16c, 16e) are arranged at the articulation of the flap (15) relative to the case.

6. The portable radio telephone apparatus according to one of claims 3 to 5, **characterized in that** the detection means are mechanical.

7. The portable radio telephone apparatus according to claim 6, **characterized in that** the detection means (16a, 16b, 16c) comprise a fin (17, 17', 17") positioned on the flap and a notch forming an interrupter (18, 18', 18"), having a shape complementary to the fin, arranged in the case such that when the flap is in the position having to be detected, the fin fits into the notch, this being connected to the switch (19) so as to switch toward the corresponding function.

8. The portable radio telephone apparatus according to claim 6, **characterized in that** the detection means (16d) comprise at least one push button (20, 20') arranged on the case such that when the flap is in the position having to be detected, a part (12a, 12d) of the flap comes into contact with the push button, this being connected to the switch (19) so as to switch toward the corresponding function.

9. The portable radio telephone apparatus according to one of claims 3 to 8, **characterized in that** the detection means are electromagnetic.

10. The portable radio telephone apparatus according to claim 9, **characterized in that** the detection means comprise an electric element sensitive to magnetic fields, arranged in the case, the flap, respectively, and a magnet arranged in the flap, the case, respectively.

11. A method for controlling a so-called "hands free" circuit of a portable telephone radio apparatus having a case (1) and a flap (12) mobile in rotation around the case between a folded down position (R) and a deployed position (D), **characterized by**:
- the activation of the "hands free" circuit when the flap is in a determined intermediate position (I), and
- the deactivation of the "hands free" circuit when the flap is in the folded down position (R) or the deployed position (D).

## Patentansprüche

1. Tragbares Funktelefon, umfassend:
- ein Gehäuse (1),
- eine im Verhältnis zum Gehäuse in Rotation bewegbare Klappe (12), wobei die Klappe im Verhältnis zum Gehäuse verschiedene Winkelpositionen einnehmen kann zwischen zwei extremen Positionen:
• einer heruntergeklappten Position (R), in der die Klappe gegen das Gehäuse heruntergeklappt ist, und
• einer hochgeklappten Position (D), in der die Klappe im Verhältnis zum Gehäuse etwa einen Winkel von 180° bildet,
- Erkennungsmittel (16a bis 16e) der Position der Klappe, und
- einen mit den Erkennungsmitteln verbundenen Schalter (19), um in eine Funktion "Abgenommen" zu schalten, die einen Telefonanruf erlaubt, wenn die Klappe in hochgeklappter Position ist, oder in eine Funktion "Aufgelegt", die den laufenden Telefonanruf unterbricht, wenn die Klappe in heruntergeklappter Position ist,
**dadurch gekennzeichnet, dass** der Schalter weiterhin Mittel umfasst, um in eine als "Freisprechen" bezeichnete Telefonruffunktion zu schalten, wenn die Klappe in einer bestimmten Zwischenposition (I) ist.

2. Tragbares Funktelefon nach Anspruch 1, **dadurch gekennzeichnet, dass** die Klappe (12) in Zwischenposition (I) im Verhältnis zum Gehäuse (1) etwa einen Winkel zwischen 60° und 120° bildet.

3. Tragbares Funktelefon nach Anspruch 1 oder 2, **dadurch gekennzeichnet, dass** die Erkennungsmittel (16a bis 16e) auf dem Gehäuse und/oder auf der Klappe angeordnet sind.

4. Tragbares Funktelefon nach Anspruch 3, **dadurch gekennzeichnet, dass** die Erkennungsmittel (16a) auf dem freien Endabschnitt der Klappe angeordnet sind und imstande, gegenüber dem Gehäuse zu gelangen.

5. Tragbares Funktelefon nach Anspruch 3 oder 4, **dadurch gekennzeichnet, dass** die Erkennungsmittel (16b, 16c, 16e) auf Ebene des Gelenks (15) der Klappe im Verhältnis zum Gehäuse angeordnet sind.

6. Tragbares Funktelefon nach einem der Ansprüche 3 bis 5, **dadurch gekennzeichnet, dass** die Erkennungsmittel mechanisch sind.

7. Tragbares Funktelefon nach Anspruch 6, **dadurch gekennzeichnet, dass** die Erkennungsmittel (16a, 16b, 16c) einen auf der Klappe positionierten Sporn (17, 17', 17") umfassen und eine einen Schalter (18, 18', 18") bildende, komplementär zum Sporn geformte Kerbe, die derart in das Gehäuse eingearbeitet ist, dass sich der Sporn, wenn sich die Klappe in der Position befindet, in der sie erkannt werden muss, in die Kerbe einpasst, wobei diese mit dem Schalter (19) verbunden ist, um in die entsprechende Funktion umzuschalten.

8. Tragbares Funktelefon nach Anspruch 6, **dadurch gekennzeichnet, dass** die Erkennungsmittel (16d) mindestens einen auf dem Gehäuse angeordneten Drücker (20, 20') umfassen, so dass, wenn sich die Klappe in der Position befindet, in der sie erkannt werden muss, ein Abschnitt (12a, 12d) der Klappe mit dem Drücker in Berührung kommt, wobei dieser mit dem Schalter (19) verbunden ist, um in die entsprechende Funktion umzuschalten.

9. Tragbares Funktelefon nach einem der Ansprüche 3 bis 8, **dadurch gekennzeichnet, dass** die Erkennungsmittel elektromagnetisch sind.

10. Tragbares Funktelefon nach Anspruch 9, **dadurch gekennzeichnet, dass** die Erkennungsmittel ein Magnetfeldern gegenüber sensibles elektrisches Element umfassen, das im Gehäuse beziehungsweise in der Klappe angeordnet ist und einen in der Klappe beziehungsweise im Gehäuse angeordneten Magneten.

11. Verfahren zur Steuerung einer als Freisprechen bezeichneten Schaltung eines tragbaren Funktelefons, ein Gehäuse (1) und eine in Rotation um das Gehäuse zwischen einer heruntergeklappten Position (R) und einer hochgeklappten Position (D) bewegbare Klappe (12) aufweisend, **gekennzeichnet durch**:
- die Aktivierung der "Freisprech"-Schaltung, wenn sich die Klappe in einer bestimmten Zwischenposition (I) befindet, und
- die Deaktivierung der "Freisprech"-Schaltung, wenn sich die Klappe in der heruntergeklappten Position (R) oder der hochgeklappten Position (D) befindet.
